# EUROPEAN PATENT APPLICATION

(11) **EP 1 995 664 A1**
(43) Date of publication of application: **26.11.2008**
(21) Application number: 07108589.8
(22) Date of filing: 22.05.2007
(51) Int. Cl.: G06F 11/30

(54) **Comparing diagnostics data of a computer network**

(71) Applicant: ABB RESEARCH LTD., 8050 Zürich (CH)
(72) Inventor: Jaliff, Juan, 72463 Västeras (SE); Olausson, Martin, 72482 Västeras (SE); Alfredsson, Fredrik, 72220 Västeras (SE); Skarström, Johan, 63358 Eskilstuna (SE); Savo, Isak, 72224 Västeras (SE)
(74) Representative: Dahnér, Christer

(57) **Abstract**

The invention concerns a method, device and computer program product for comparing diagnostics data regarding a number of nodes in a computer network environment that includes at least one plug-in module arranged to collect data regarding one or more applications in the network environment. According to the present invention a selection of a number of nodes to be compared are received (20) by a diagnostics collection function unit, and for these nodes current diagnostics data is or has been collected by the plug-in module. A selection of a set of reference data is also received (22). The diagnostics collection function unit then fetches (24) the set of reference data and current diagnostics data regarding all selected nodes, detects (26) discrepancies between the set of reference data and current diagnostics data of the selected nodes and presents (28) the diagnostics data of the selected nodes, where the discrepancies from the set of reference data are indicated.

## Description

### TECHNICAL FIELD OF THE INVENTION

The present invention relates to the provision of support of computer networks. The invention more particularly relates to a method, device and computer program product for comparing diagnostics data regarding a number of nodes in a computer network environment.

### DESCRIPTION OF RELATED ART

Computer networks are known to be used for controlling manufacturing and process industries, such as chemical plants, oil refineries, pulp and paper mills, steel mills, etc.

These networks also often include plug-in modules arranged to collect diagnostics data regarding one or more applications in nodes of the network environment. These data can provide a support user in a support organisation with relevant information for discovering faults and errors in the nodes.

However, the amount of data collected in this way is normally large and involves a large amount of work for support users in comparing collected data for detecting any faults and discrepancies. The data may furthermore be provided in a number of different file formats. There is therefore a need for simplifying the analysis of such data, especially when several nodes are analysed, each having a number of different applications etc.

### SUMMARY OF THE INVENTION

The present invention is therefore directed towards simplifying the analysis of diagnostics data for a support user.

One object of the present invention is therefore to provide a method for comparing diagnostics data regarding a number of nodes in a computer network environment, which method simplifies the analysis of the diagnostics data for a support user.

This object is according to a first aspect of the present invention achieved through a method for comparing diagnostics data regarding a number of nodes in a computer network environment that includes at least one plug-in module arranged to collect data regarding one or more applications in the network environment and comprising the steps of:
receiving a selection of a number of nodes to be compared, for which nodes current diagnostics data is collected by the plug-in module,
receiving a selection of a set of reference data,
fetching said set of reference data and current diagnostics data regarding all selected nodes,
detecting discrepancies between the set of reference data and current diagnostics data of the selected nodes , and
presenting the diagnostics data of the selected nodes, where the discrepancies from the set of reference data are indicated.

Another object of the present invention is to provide a device for comparing diagnostics data regarding a number of nodes in a computer network environment, which device simplifies the analysis of the diagnostics data for a support user.

This object is according to a second aspect of the present invention achieved through a device for comparing diagnostics data regarding a number of nodes in a computer network environment that includes at least one plug-in module arranged to collect data regarding one or more applications in the network environment and comprising:
a diagnostics collection function unit arranged to
   receive a selection of a number of nodes to be compared, for which nodes current diagnostics data is collected by the plug-in module,
   receive a selection of a set of reference data,
   fetch said set of reference data and current diagnostics data regarding all selected nodes,
   detect discrepancies between the set of reference data and current diagnostics data of the selected nodes , and
   order said support user interface to present the diagnostics data of the selected nodes, where the discrepancies from the set of reference data are indicated.

Another object of the present invention is to provide a computer program product for comparing diagnostics data regarding a number of nodes in a computer network environment, which computer program product simplifies the analysis of the diagnostics data for a support user.

This object is according to a third aspect of the present invention achieved through a computer program product for comparing diagnostics data regarding a number of nodes in a computer network environment that includes at least one plug-in module arranged to collect data regarding one or more applications in the network environment and comprising computer program code to make a computer when said code is loaded into said computer:
receive a selection of a number of nodes to be compared, for which nodes current diagnostics data is collected by the plug-in module,
receive a selection of a set of reference data,
fetch said set of reference data and current diagnostics data regarding all selected nodes, detect discrepancies between the set of reference data and current diagnostics data of the selected nodes , and
order a support user interface to present the diagnostics data of the selected nodes, where the discrepancies from the set of reference data are indicated.

The present invention has the advantage of simplifying the analysis of diagnostics data for a support user. In this way the need for manual checking of long lists of diagnostics data is avoided.

It should be emphasized that the term "comprises/comprising" when used in this specification is taken to specify the presence of stated features, integers, steps or components, but does not preclude the presence or addition of one or more other features, integers, steps, components or groups thereof.

### BRIEF DESCRIPTION OF THE DRAWINGS

The present invention will now be described in more detail in relation to the enclosed drawings, in which:
fig. 1 schematically shows a simplified computer network for process control,
fig. 2 outlines a structure of nodes and content in one node of the network in fig. 1,
fig. 3 shows a flow chart outlining a number of method steps taken in a method for comparing diagnostics data regarding a number of nodes in the computer network of fig. 1,
fig. 4 shows a simplified result file generated according to the present invention where discrepancies between diagnostics data of two nodes are shown,
fig. 5 shows a flow chart outlining a number of method steps taken for determining a correct software version according to the present invention, and
fig. 6 schematically shows a computer program product in the form of a CD ROM disc comprising computer program code for carrying out the method of the present invention.

### DETAILED DESCRIPTION OF EMBODIMENTS

In the following description, for purposes of explanation and not limitation, specific details are set forth such as particular architectures, interfaces, techniques, etc. in order to provide a thorough understanding of the present invention. However, it will be apparent to those skilled in the art that the present invention may be practiced in other embodiments that depart from these specific details. In other instances, detailed descriptions of well known devices, circuits, and methods are omitted so as not to obscure the description of the present invention with unnecessary detail.

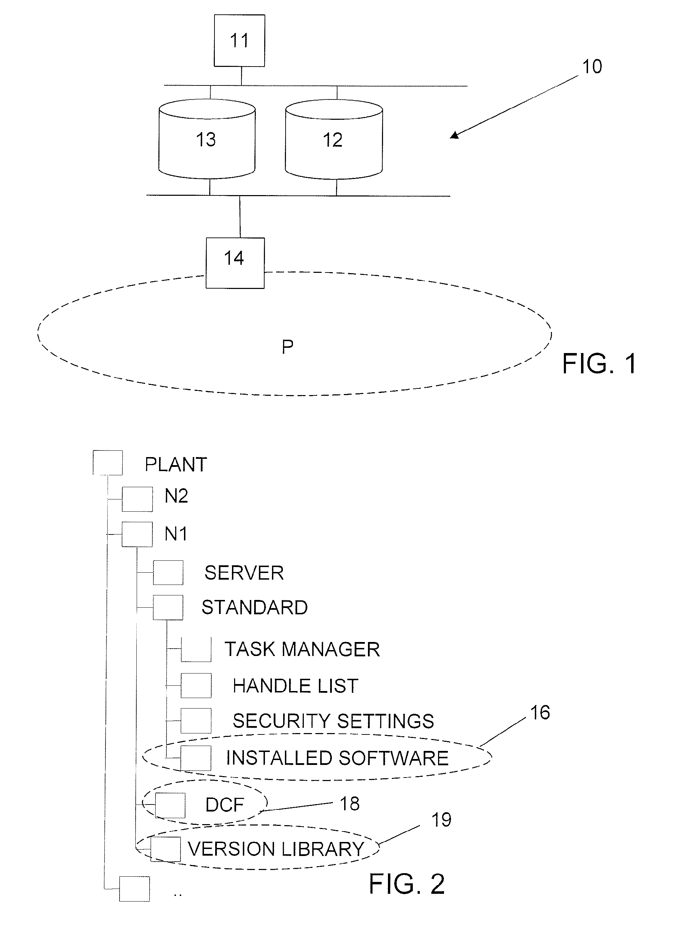

Fig. 1 schematically shows a computer network environment 10 for which diagnostics data are to be collected and compared according to the principles of the present invention. The network is typically a network for process control. The network is typically also an object based computerised network for controlling a process or perhaps part of a process. Typical processes are electrical power generation and supply process, water purification and distribution processes, oil and gas production and distribution processes, petrochemical, chemical, pharmaceutical and food processes, and pulp and paper production processes. These are just some examples of processes where the network can be used. There exist countless other processes. The network 10 in fig. 1 has a low level device 14, which is directly involved in controlling the process P, a first and a second control device 12 and 13 on a control level as well as an operator terminal 11 on an operator level. It should be realised that the network shown in fig. 1 is a simplified network in order to describe the environment for which the present invention is to be applied. There can therefore be several low level devices, control devices and operator terminals. However, the network 10 is isolated.

The network is organized in a hierarchical data structure with nodes and items of these nodes in the form of software and files. Fig. 2 shows a simplified such structure where a first highest level is named Plant. In a second level there are provided two objects named N1 and N2, which are both nodes of the structure. A further unnamed node is indicated in the bottom of the structure in order to show that there may be several such nodes. A first of the nodes N1 is here associated with the first server 12, while a second of the nodes N2 is associated with the second server 13. In a lower level of the first node N1, there are provided a number of folders Server, Standard, DCF and Version Library. Here the item Server includes the various control functionality or control software that is provided in the server 12 of fig. 1. The folder Standard includes a number of plug-in modules, which are here exemplified by the modules Task Manager, Handle List, Security Settings and Installed Software 16. The plug-in modules are associated with applications provided in the network and include information about how applications in the node function. There is furthermore a folder DCF 18 on the first server 12, which includes a diagnostics collection function. This tool runs a number of command files for collecting relevant diagnostic data on the network and generates error analysis reports as a result, which reports may be provided in the form of XML files. This function 18 also provides the functionality of the present invention. Finally there is a software version library 19, the functioning of which will be described later.

When such diagnostics data in such files are gathered, there is a lot of information, which is hard to analyse in an efficient way, especially if there are a lot of data collected for each node and there are several nodes. The present invention is therefore directed towards simplifying such analysis.

A device for comparing diagnostics data regarding a number of nodes according to the present invention is in an embodiment of the present invention provided on the first server 12 and then includes a unit which implements the diagnostics collection function 18. This device may communicate with a support user interface, which is here provided by the operator terminal 11. A support user may thus communicate with the diagnostics collection function 18 via this interface 11. The diagnostics collection function unit 18 is here able to communicate with the version library 19 that includes data about recommended versions of various software that may be provided in the network The device according to the present invention is here provided in the server 12. However it should be realised that it may be provided on any suitable terminal or computer of the network 10. It may also be provided through a computer outside of the network 10, but being able to communicate with the network, for instance in a support organisation provided for the network 10..

It should also be realised that the library 19 need not be provided in the first server 12, but may be provided on another node of the network 10 or even outside of the network and reached by the diagnostics collection function unit 18..

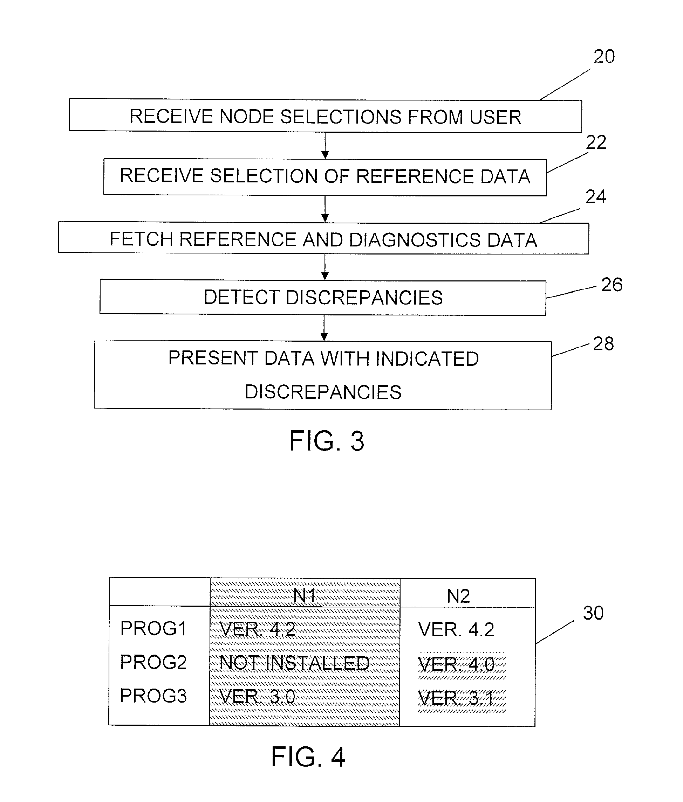

The functioning of the present invention will now be described in more detail with reference being made to the previously described fig. 1 and 2 as well as to fig. 3, which shows a number of method steps in a method of comparing diagnostics data regarding a number of nodes in the computer network of fig. 1, and to fig. 4, which shows a simplified result file generated according to the present invention where discrepancies between diagnostics data of two nodes are shown.

As mentioned earlier, the diagnostics collection function in the network 10 can gather a large amount of diagnostics data, in the form of several files, for instance XML files, where one is typically provided for each node. This is then used by a support user in order to find out where possible faults in software or processes being run on a node are located. However, such faults are often hard to locate because of the vast amount of information. There is therefore a need for organising the data so that differences can be directly identified. The diagnostics collection function unit 18 of the present invention therefore has functionality for enabling this.

It all starts with a support user associated with the network 10 needing to organise diagnostics data of some type from various nodes of the network. He/she may first select type of diagnostics data that need to be analysed. As an example it is here assumed that the support user selects to analyse software. Based on this selection the diagnostics collection function unit 18 selects a type of plug-in module from which it is to fetch diagnostics data. In the present example it selects the plug-in module Installed Software 16. Then the support user has to select for which part of the network environment the analysis is to be performed. The user therefore selects nodes via the interface 11, which selections are received by the diagnostics collection function unit 18, step 20. Here it is assumed that the user has selected the nodes N1 and N2 indicated in fig. 2. For theses nodes there may exist recently collected (by the plug-in module Installed Software) diagnostics data collection files. According to the present invention it is here possible to select the most recently generated such files or to order the plug-in module 16 to collect such data and generate new files. With this selection there are thus associated current diagnostics data. The user may then select one set of reference data, with which the current diagnostics data of the nodes are to be compared. This reference data may be the most recently generated or current diagnostics data of one of the selected nodes. It may also be earlier generated diagnostics data associated with one or more of the nodes, i.e. diagnostics data collected for one or more of the nodes at an earlier time, for instance a time when this/these node(s) functioned properly. The reference data may furthermore be data of a node having a standard configuration, which may be a configuration that is known to be error-free. Also this selection is then received by the diagnostics collection function unit 18 via the interface 11, step 22. Thereafter the diagnostics collection function unit 18 fetches the current diagnostics data files and reference data files of the nodes, step 24, i.e. here the files that have been generated by the plug-in module Installed Software 16. The fetching can be made from the plug-in module 16, but it may also be made from another location on the network, where the plug-in module 16 has stored the diagnostics data. As indicated above it is here also possible that the plug-in module 16 is ordered to generate the current diagnostics data. The diagnostics collection function unit 18 then detects discrepancies between the reference data and the current data of the other nodes, step 26, and therefore presents the diagnostics data for the nodes together with the reference data and with the discrepancies indicated via the support user interface 11, step 28. The presented data can furthermore be provided as a collection file according to a suitable format, such as Excel, in order to enable various types of presentations.

One exemplifying collection file 30 with the data that may be presented for the nodes N1 and N2 is shown in fig. 4, where the current diagnostics data of the node N1 has been selected as the set of reference data. This is shown highlighted in fig. 4. Here the current diagnostics data all concern a number of software versions of various pieces of software, indicated by prog1, prog2 and prog3. Here both nodes have the same version, ver. 4.2, of a first piece of software prog1, while a second piece of software prog2 is not installed on the reference node N1, while a version 4.0 exists in the other node N2. This difference is thus highlighted. There is finally a third piece of software prog3, where the reference node N1 has a version ver. 3.0, while the other node N2 has a version ver. 3.1, where this discrepancy is thus also indicated. It should be realised that the amount of data of each node and the number of nodes compared may be significantly higher than what is shown in fig. 4.

In this way the support user can in a simple way detect the differences. This simplifies the analysis of diagnostics data for the support user. In this way the need for manual checking of long lists of diagnostics data is avoided.

It should here be realised that the present invention is not limited to software and software versions, but that other types of diagnostics data may be compared, like for instance data regarding processes being run on a node, for instance in the form of process lists. In this case the data is provided by the plug-in module Task Manager. The data may furthermore include other data such as security settings, like firewall settings, as well as data such as the number of open ports of the nodes. This data is then gathered from the plug-in module Security Settings. Thus it is possible to compare data for all the plug-in modules that exist. For this reason all plug-in modules should provide diagnostics data in the same file format.

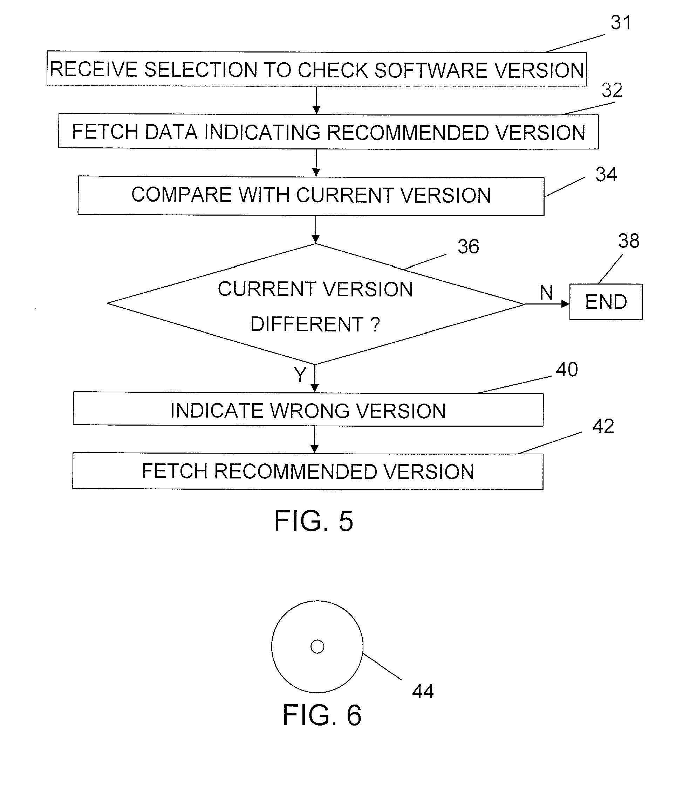

The present invention provides a further functionality in relation to software versions. This will now be described with reference also being made to fig. 5, which shows a flow chart outlining a number of method steps taken for determining a correct software version according to the present invention. If a selection to check a software version is received via the interface 11, step 31 the diagnostics collection function unit 18 may allow the support user to see which software version is the recommended version. This may in its simplest form be done through providing a link to the support user where such data may be found. The diagnostics collection function unit 18 may also, as is shown in fig. 5, fetch this data from a location where such data is present, step 32. As an example such recommended version data may be provided in the library 19 in fig. 2. The recommended version data is then received by the diagnostics collection function unit 18, which then compares the recommended version with the current version of the node being investigated, step 34. If the current version is the same, step 36, this investigation is ended, step 38. If however the current version of the software on the node differs from the recommended version, step 36, the diagnostics collection function unit 18 indicates that the current version is wrong, step 40. This indication is normally provided via the support user interface 11. Thereafter the diagnostics collection function unit 18 may fetch the recommended version, step 42, which may be done from the library 19 or from somewhere else either in the network 10 or outside the network. If it is fetched from outside of the network it may be fetched from a library provided by the software supplier. Thereafter it is possible to install the recommended version on the node and in this way it may be possible to remove the fault of the node, if the fault was due to the user of a software version that does not function well in the network environment.

As an alternative to fetching the recommended software version, it is possible that the diagnostics collection function unit instead indicates to the support user where this recommended version may be fetched from so that the support user can himself fetch and install it on the node.

This additional checking and downloading of correct software versions saves the time for the support user even more and simplifies the locating of correct versions.

The diagnostics collection function unit in the device for comparing diagnostics data, may be implemented through one or more processors together with computer program code for performing its functions. The program code mentioned above may also be provided as a computer program product, for instance in the form of one or more data carriers carrying computer program code for performing the functionality of the present invention when being loaded into the computer, which computer in the example given above is the first server. One such carrier 44, in the form of a CD ROM disc is generally outlined in fig. 6. It is however feasible with other data carriers, like diskettes, memory sticks or USB memories. The computer program code can furthermore be provided as pure program code on an external server and fetched from there for provision in the device that is to receive it.

While the invention has been described in connection with what is presently considered to be most practical and preferred embodiments, it is to be understood that the invention is not to be limited to the disclosed embodiments, but on the contrary, is intended to cover various modifications and equivalent arrangements. The invention is for example not limited to computer networks involved in process control, but can be applied in any computer network. In case there is only one type of plug-in module there is furthermore no need for the support user to make a selection of type of diagnostics data. Then there is also of course no selection of type of plug-in module. In case the set of reference data is not current diagnostics data of a node, it is furthermore possible to omit the presentation of this set of reference data. There may also be several plug-in modules of the same type, each provided on a different node and where the diagnostics collection function unit is arranged to collect diagnostics data from each such plug-in module. Therefore the present invention is only to be limited by the following claims.

## Claims

1. Method for comparing diagnostics data regarding a number of nodes (N1, N2) in a computer network environment (10) that includes at least one plug-in module (16) arranged to collect data regarding one or more applications in the network environment and comprising the steps of:
receiving (20) a selection of a number of nodes (N1, N2) to be compared, for which nodes current diagnostics data is collected by the plug-in module (16),
receiving (22) a selection of a set of reference data,
fetching (24) said set of reference data and current diagnostics data regarding all nodes,
detecting (26) discrepancies between the set of reference data and current diagnostics data of the selected nodes , and
presenting (28, 30) said diagnostics data of the selected nodes, where the discrepancies from the set of reference data are indicated.

2. Method according to claim 1, wherein the set of reference data is the current diagnostics data of one of the selected nodes.

3. Method according to claim 1, wherein the set of reference data is previously gathered diagnostics data of at least one of the nodes.

4. Method according to claim 1, wherein the set of reference data is data of a node having a standard configuration.

5. Method according to any previous claim, wherein the data includes data of at least one software version and further comprising the steps of, receiving (31) a selection to check software versions and at least providing a link for connection to data indicating the recommended version of said software to be used in the computer network environment (10).

6. Method according to claim 5, further comprising the step of fetching (32) said data indicating the recommended software version, comparing (34) it with the version of the node and indicating (40) a wrong version in case they differ.

7. Method according to claim 6, further comprising the step of fetching (42) the recommended software version for being installed on the node.

8. Method according to any previous claim, wherein the diagnostics data includes process lists, security settings and/or the number of open ports.

9. Method according to any previous claim, wherein there exists more than one plug-in module (16), each being arranged to collect a different type of diagnostics data, and further comprising the steps of receiving a selection of type of diagnostics data to be applied in the comparison between nodes and selecting plug-in module from which current diagnostics data is supplied based on the selection of type of diagnostics data.

10. Method according to any previous claim, further comprising presenting also the set of reference data.

11. Device (12) for comparing diagnostics data regarding a number of nodes (N1, N2) in a computer network environment (10) that includes at least one plug-in module (16) arranged to collect data regarding one or more applications in the network environment and comprising:
a diagnostics collection function unit (18) arranged to
receive a selection of a number of nodes (N1, N2) to be compared, for which nodes current diagnostics data is collected by the plug-in module (16),
receive a selection of a set of reference data,
fetch said set of reference data and current diagnostics data regarding all selected nodes,
detect discrepancies between the set of reference data and current diagnostics data of the selected nodes, and
order a support user interface (11) to present (30) said diagnostics data of the selected nodes, where the discrepancies from the set of reference data are indicated.

12. Device (12) according to claim 11, wherein the set of reference data is the diagnostics data of one of the selected nodes.

13. Device (12) according to claim 11, wherein the set of reference data is a previously saved collection of data of at least some of the nodes.

14. Device (12) according to claim 11, wherein the set of reference data is data of a node having a standard configuration.

15. Device (12) according to any of claims 11 - 14, wherein the data includes data of at least one software version and the diagnostics collection function unit (18) is further arranged to receive a selection to check software versions and at least provide a link for connection to data indicating the recommended version of said software to be used in the computer network environment (10).

16. Device (12) according to claim 15, wherein the diagnostics collection function unit (18) is further arranged to fetch said data indicating the recommended software version, compare it with the version of the node and indicate a wrong version in case they differ.

17. Device (12) according to claim 16, wherein the diagnostics collection function unit (18) is further arranged to fetch the recommended software version for being installed on the node.

18. Device (12) according to any of claims 11 - 17, wherein the diagnostics data includes process lists, security settings and/or the number of open ports.

19. Device (12) according to any of claims 11 - 18, wherein there exists more than one plug-in module (16), each being arranged to collect a different type of diagnostics data, wherein the diagnostics collection function unit (18) is further arranged to receive a selection of type of diagnostics data to be applied in the comparison between nodes and select plug-in module from current diagnostics data is supplied based on the selection of type of diagnostics data.

20. Device (12) according to any of claims 11 - 19, wherein the diagnostics collection function unit (18) is further arranged to order said support user interface to present (30) also the set of reference data.

21. Computer program product (44) for comparing diagnostics data regarding a number of nodes (N1, N2) in a computer network environment (10) that includes at least one plug-in module (16) arranged to collect data regarding one or more applications in the network environment and comprising computer program code to make a computer (12) when said code is loaded into said computer:
receive a selection of a number of nodes (N1, N2) to be compared, for which nodes current diagnostics data is collected by the plug-in module (16),
receive a selection of a set of reference data,
fetch said set of reference data and current diagnostics data regarding all selected nodes,
detect discrepancies between the set of reference data and current diagnostics data of the selected nodes , and
order a support user interface to present (30) said diagnostics data of the selected nodes, where the discrepancies from the set of reference data are indicated.
